# DEMANDE DE BREVET EUROPEEN

(11) **EP 0 992 714 A1**
(43) Date de publication de la demande: **12.04.2000**
(21) Numéro de dépôt: 99402470.1
(22) Date de dépôt: 08.10.1999
(51) Int. Cl.: F16H 61/00

(54) **Procédé et dispositif de pilotage d'une transmission automatique adaptés à une stratégie de redémarrage automatique du moteur**

(30) Priorité: 09.10.1998 FR 9812655
(71) Demandeur: RENAULT, 92109 Boulogne-Billancourt (FR)
(72) Inventeur: Leorat, François, 12000 Versailles (FR)

(57) **Abrégé**

Dispositif de pilotage d'une transmission automatique associée à un moteur thermique coupé automatiquement au bout d'un certain temps d'arrêt du véhicule et relancé en réponse à une intervention du conducteur, caractérisé en ce qu'il comporte un accumulateur hydraulique (1) susceptible de se décharger en direction des récepteurs serrés sur le premier rapport de marche avant, en réponse à la fermeture d'une électrovanne (2) anticipant le démarrage du moteur.

## Description

La présente invention se rapporte au pilotage des transmissions automatiques.

Elle vise à adapter une transmission automatique à une stratégie dite de "stop and start" du groupe moto-propulseur, qui consiste à couper le moteur au bout d'un certain temps d'arrêt du véhicule, et à le relancer automatiquement, lorsque le déplacement du véhicule est à nouveau souhaité, en réponse à une intervention du conducteur, par exemple par une pression du pied sur l'accélérateur.

Cette invention trouve une application privilégiée, mais non exclusive, sur un véhicule équipé d'un alterno-démarreur, dont l'un des avantages est de permettre une stratégie de "stop and start", notamment en circulation urbaine.

Une telle stratégie n'est acceptable par le conducteur, en terme d'agrément, que si le processus de démarrage du véhicule est entièrement automatique : une stratégie de "start and stop" est par conséquent toujours à associer à un embrayage automatisé, une boite de vitesses automatique (BVA), ou une transmission continûment variable (CVT). Dans les deux derniers cas (BVA ou CVT), le problème du redémarrage automatique est délicat à résoudre, car pour les BVA ou CVT dotés de systèmes hydrauliques classiques, la pompe hydraulique est entraînée directement par le moteur, si bien qu'à l'arrêt de ce dernier, la pression de commande dans la boîte tombe à zéro. A la relance du moteur, il faut un certain temps pour que la pression se stabilise à un niveau bien maîtrisé, la régulation de pression ne pouvant se faire qu'à partir d'un régime moteur suffisant pour que la pompe débite suffisamment d'huile pour permettre au régulateur électro-hydraulique d'assurer correctement sa fonction. Par ailleurs, en raison de la disparition de la pression de commande à l'instant de l'arrêt du moteur, la chaîne cinématique s'est "ouverte", si bien que le redémarrage implique que la chaîne cinématique soit de nouveau refermée, et ce sans à-coups, ni glissement intempestif des embrayages et/ou freins de la transmission en situation de première.

Les systèmes de régulation électro-hydrauliques classiques ne sont absolument pas prévus pour fonctionner dans ce cas de figure, et sont inaptes à assurer une prestation de redémarrage convenable, tant sur le plan du confort que sur celui de la longévité normale de la transmission.

Les organes de commutation d'une transmission automatique ne sont pas étanches, et, en fonctionnement normal, ne sont maintenus sous pression que par l'apport continu de fluide sous pression fourni par la pompe pour compenser les fuites : dès que la pompe s'arrête de tourner à l'arrêt du moteur, les fuites cessent d'être compensées, et les embrayages et freins se desserrent, ouvrant ainsi la chaîne cinématique. Pour pouvoir redémarrer sans à-coup ni glissement intempestif, il convient d'avoir refermé la transmission avant que le moteur ne soit à même de fournir à nouveau une force de traction.

La présente invention propose un procédé et un dispositif permettant de refermer la chaîne cinématique de la transmission, dans l'intervalle de temps séparant l'instant où le conducteur appuie sur l'accélérateur pour relancer le moteur, et l'instant où le moteur est à même d'entraîner le véhicule.

Elle prévoit en particulier que, pendant les phases d'arrêt du moteur thermique, la pression de ligne de la transmission tombe à zéro, et que, lors des phases de redémarrage, on envoie aux récepteurs concernés par le premier rapport de marche avant, une pression capable de refermer la chaîne cinématique de la transmission avant que le moteur n'ait atteint sa vitesse de démarrage.

Selon un mode de réalisation préférentiel, cette pression est libérée par la vidange d'un accumulateur, en réponse à la fermeture d'une électrovanne.

Pour restaurer une alimentation normale du circuit de ligne principal de la transmission à l'issue de la phase de démarrage, cette électrovanne peut avantageusement être refermée, dès que le moteur a atteint son régime normal de ralenti.

L'invention propose également un dispositif de pilotage de transmission automatique, adapté à une stratégie de redémarrage du moteur.

Ce dispositif comporte un accumulateur hydraulique susceptible de se décharger en direction des récepteurs serrés sur le premier rapport de marche avant, en réponse à la fermeture d'une électrovanne anticipant le démarrage du moteur.

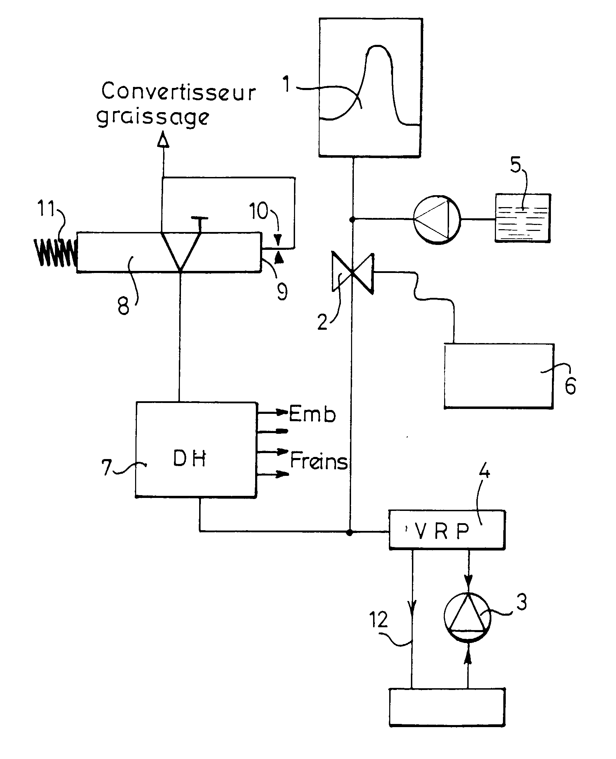

D'autres caractéristiques et avantages de la présente invention apparaîtront clairement à la lecture de la description suivante d'un mode de réalisation particulier de celle-ci, en liaison avec le dessin annexé, dont la figure unique illustre schématiquement le dispositif proposé.

Sur cette figure, on a fait apparaître :
- l'accumulateur hydraulique 1, mentionné ci-dessus,
- une électrovanne étanche 2, contrôlant la vidange de l'accumulateur hydraulique
- la pompe de servitude principale de la transmission 3,
- une vanne de régulation de pression 4,
- l'électropompe 5 de remplissage de l'accumulateur,
- le calculateur de la transmission 6,
- le distributeur hydraulique de la transmission 7,et
- un tiroir hydraulique 8 interposé sur le circuit d'alimentation du convertisseur et de graissage.

Pendant les phases d'arrêt du moteur thermique, il est illusoire de vouloir maintenir sous pression les circuits hydrauliques permettant d'établir le rapport de première, sauf à prévoir une électropompe auxiliaire débitant en permanence, ce qui est exclu pour d'évidentes raisons énergétiques. Pour instaurer l'état de première dès que le conducteur manifeste son intention de redémarrer, il suffit cependant d'envoyer dans les circuits concernés un débit d'huile sous une pression suffisante, et de manière quasi-instantanée. Pour ce faire, un accumulateur hydraulique 1 est relié, à travers une électrovanne 2, au circuit hydraulique de pression de ligne principale alimenté, en phase normale de fonctionnement, par la pompe principale 3 directement entraînée par le moteur hydraulique, cette pression de ligne principale étant régulée par une vanne de régulation de pression VRP 4. Une électropompe 5 à pressostat incorporé est branchée sur le circuit de vidange de l'accumulateur 1, en amont de l'électrovanne 2. L'électrovanne 2 est commandée par le calculateur 6, qui supervise le fonctionnement de la transmission.

Le distributeur hydraulique 7 (qui incorpore la VRP 4), établit, entre autres, les circuits hydrauliques nécessaires, en situation de "stop", à la sélection du rapport de première, et élabore la (les) pression(s) d'alimentation du convertisseur et de graissage. Cette (ces) pression(s)transite(nt) à travers un tiroir hydraulique 8, dont une extrémité 9 reçoit l'une des pressions ci-dessus, à travers un gicleur 10, et l'autre extrémité recueille la poussée d'un ressort de compression 11 : lorsque la pression de convertisseur/graissage devient inférieure à un seuil défini par la tare du ressort 11, le tiroir 8 bascule et coupe l'alimentation des circuits de convertisseur/graissage.

En stratégie "stop and start", dès que le moteur est arrêté, la pression de ligne, et toutes les pressions subséquentes dans la boîte, tombent à zéro : le tiroir 8 bascule donc et coupe les circuits convertisseur/graissage. De plus, la VRP 4 se ferme. Par ailleurs, lors des phases de marche du véhicule, l'électropompe 5 a gonflé l'accumulateur 1 à la pression normale, qui peut être avantageusement la pression maximale de fonctionnement de la boîte, l'électrovanne 2 étant maintenue fermée par le calculateur 6. Tout déficit de pression dans l'accumulateur 1 est détecté par le pressostat intégré à la pompe 5, qui est donc mise en marche pour restaurer la pression requise.

Lors de la phase de démarrage, dès que le conducteur agit sur la pédale d'accélérateur, le calculateur 6 ouvre l'électrovanne 2, ce qui libère, en direction du circuit de pression de ligne principale, le débit sous forte pression disponible grâce à l'accumulateur 1. Tant que la consigne de pression en phase de démarrage n'est pas atteinte, la VRP 4 reste fermée, et son débit de décharge vers la bâche par le conduit 12 est nul. De même, tant que la pression nominale de convertisseur/graissage n'est pas atteinte, le tiroir 8 reste verrouillé en position fermée, si bien que le débit convertisseur/graissage est lui aussi nul. Il en résulte que tout le débit expulsé par l'accumulateur 1 est disponible pour la remise en pression des récepteurs (embrayages et freins) concernés par le rapport de première. Sachant qu'en général, deux, ou parfois trois, récepteurs sont en prise pour la première, et que le volume d'huile déplacé par chaque récepteur excède rarement 15 cm3, on voit que le dimensionnement de l'accumulateur 1, même en prenant des gardes confortables, reste tout à fait raisonnable. La pression de stockage dans l'accumulateur 1 étant la pression maximale de fonctionnement de la boîte, le remplissage des récepteurs est très rapide, dans la mesure où les autres circuits de la boîte, forts consommateurs, sont fermés (VRP et convertisseur/graissage) : la chaîne cinématique est donc refermée avant que le moteur n'ait atteint sa vitesse de démarrage. Si nécessaire, une temporisation très courte peut être prévue, entre l'instant où l'ordre est donné d'ouvrir l'électrovanne, et l'instant où l'alterno-démarreur commence à entraîner le moteur. Il en résulte que le redémarrage du véhicule se fait sans à-coup, et sans autre glissement que celui, normal, du convertisseur en phase de démarrage.

Dès que les niveaux de pression nominaux sont retrouvés, c'est à dire pratiquement dès que le moteur atteint un régime normal de ralenti, le débit d'appoint de l'accumulateur 1 devient inutile, et l'électrovanne 2 peut être refermée. Il convient alors de regonfler immédiatement l'accumulateur 1, grâce à l'électropompe 5, de manière à le rendre disponible pour un nouveau cycle de "stop and start". Pendant la phase de décharge de l'accumulateur 1, il est également possible de faire débiter l'électropompe 5, de manière à additionner, en débit utilisable, le débit propre de la pompe 5, au débit de décharge de l'accumulateur 1.

Si nécessaire, le retour en position normale du tiroir 8 peut être temporisé, en diaphragmant plus ou moins fortement le gicleur 10.

## Revendications

1. Procédé de pilotage d'une transmission automatique associée à un moteur thermique coupé automatiquement au bout d'un certain temps d'arrêt du véhicule et relancé en réponse à une intervention du conducteur, caractérisé en ce que pendant les phases d'arrêt du moteur thermique la pression de ligne de la transmission tombe à zéro, et en ce que, lors des phases de redémarrage, on envoie aux récepteurs concernés par le premier rapport de marche avant une pression capable de refermer la chaîne cinématique de la transmission avant que le moteur n'ait atteint sa vitesse de démarrage.

2. Procédé de pilotage selon la revendication 1, caractérisé en ce que ladite pression est libérée par la vidange d'un accumulateur (1), en réponse à la fermeture d'une électrovanne (2).

3. Procédé de pilotage selon la revendication 2, caractérisé en ce que l'électrovanne (2) est refermée, dès que le moteur a atteint son régime normal de ralenti.

4. Procédé de pilotage selon la revendication 1, 2 ou 3, caractérisé en ce que l'entraînement du moteur est temporisé par rapport à l'ouverture de l'électrovanne (2).

5. Procédé de pilotage selon la revendication 2, 3 ou 4, caractérisé en ce que l'accumulateur (1) est regonflé immédiatement dès la fermeture de l'électrovanne (2).

6. Procédé de pilotage selon l'une des revendications 2 à 5, caractérisé en ce que le débit de la pompe (5) de remplissage de l'accumulateur (1) est additionné au débit de ce dernier, pendant ses phases de décharge.

7. Procédé de pilotage selon l'une des revendications précédentes, caractérisé en ce que l'alimentation des circuits de convertisseur et de graissage de la transmission est coupée, lorsque cette alimentation devient inférieure, en pression, à un seuil défini.

8. Dispositif de pilotage d'une transmission automatique associée à un moteur thermique coupé automatiquement au bout d'un certain temps d'arrêt du véhicule et relancé en réponse à une intervention du conducteur, caractérisé en ce qu'il comporte un accumulateur hydraulique (1) susceptible de se décharger en direction des récepteurs serrés sur le premier rapport de marche avant, en réponse à la fermeture d'une électrovanne (2) anticipant le démarrage du moteur.

9. Dispositif de pilotage selon la revendication 8, caractérisé en ce que l'accumulateur (1) est alimenté par une électropompe (5) branchée sur son circuit de vidange, et relié au circuit de ligne principal de la transmission par l'électrovanne (2).

10. Dispositif de pilotage selon la revendication 9, caractérisé en ce qu'il comporte un tiroir hydraulique (8) basculant temporairement en position de coupure d'alimentation des circuits de convertisseur et de graissage de la transmission, en réponse à une baisse de pression dans ces derniers.
